# EUROPÄISCHE PATENTSCHRIFT

(11) **EP 0 574 668 B1**
(45) Veröffentlichungstag und Bekanntmachung des Hinweises auf die Patenterteilung: **17.05.1995**
(21) Anmeldenummer: 93106339.0
(22) Anmeldetag: 20.04.1993
(51) Int. Cl.: G01G 21/28

(54) **Präzisionswaage**
Precision balance
Balance de précision

(30) Priorität: 19.05.1992 CH 1595/92
(43) Veröffentlichungstag der Anmeldung: 22.12.1993
(73) Patentinhaber: Mettler-Toledo AG, 8606 Greifensee (CH)
(72) Erfinder: Luechinger, Paul, CH-8610 Uster (CH); Fringeli, Eduard, CH-8608 Bubikon (CH)

(56) Entgegenhaltungen:
- EP-A- 0 234 008
- DE-C- 3 508 873
- DE-U- 7 736 324

## Beschreibung

Die Erfindung betrifft eine Präzisionswaage mit einer Waagschale und einem die Waagschale allseits umschliessenden Wägeraum, mit einer mit dem Gehäuse der Waage verbundenen Rückwand, mit wenigstens einem verschiebbaren seitlichen Fenster und mit einer als Fenster ausgebildeten Frontwand, sowie mit einer den Wägeraum oben abschliessenden Abdeckung.

Es ist bekannt, bei hochauflösenden Waagen die Waagschale in einem die Waagschale allseits umschliessenden Wägeraum unterzubringen, um Wägefehler, verursacht durch Luftströmungen, zu vermeiden. Bei den bekannten Waagen ist der Wägeraum üblicherweise mit seitlichen Schiebefenstern versehen, die den Zugang zur Waagschale von beiden Seiten ermöglichen. In vielen Fällen ist es auch möglich, den Wägeraum von oben zu erreichen, indem in der Abdeckung ebenfalls ein Schiebefenster vorgesehen ist. Die meist aus Glas bestehenden Schiebefenster können durch Dämpfe in der Raumluft und/oder durch das Wägegut auf der Innenseite verunreinigt werden. Die Reinigung des Wägeraumes ist bei herkömmlichen Waagen sehr umständlich, und es gelingt in den wenigsten Fällen, die Schiebefenster vollständig zu reinigen. Die Rückstände, vor allem in den mit dem Waagengehäuse überlappenden Bereichen sowie entlang der oberen und der unteren Führung, bauen sich mit der Zeit auf und können die Funktionsfähigkeit der Schiebefenster beeinflussen.

Die Aufgabe der vorliegenden Erfindung ist die Schaffung einer Präzisionswaage, bei welcher die den Wägeraum bildenden Fenster und Wände in einfacher Weise für eine Reinigung freigelegt werden können.

Gelöst wird diese Aufgabe durch eine obere Abdeckung, welche durch ein Verriegelungsmittel mit der Rückwand fest verbindbar ist und zum Freilegen und Reinigen der Fenster durch Lösen der Verriegelung von der Rückwand lös- und abhebbar ist.

Nach dem Lösen und Abheben der oberen Abdeckung können sowohl die seitlichen Schiebefenster als auch die Frontscheibe aus einer im Gehäuseboden angebrachten Führung bzw. Halterung herausgehoben und einzeln leicht gereinigt werden. Nebst den die Seitenwände bildenden Teilen kann auch eine Wägeraumbodenabdeckung als Gesamtes abgehoben und gereinigt werden. Die obere Abdeckung ist mit einem einfachen, von Hand verschiebbaren Riegel, mit einem Bajonettverschluss oder mit einem anderen Verriegelungsmittel mit der Rückwand der Waage starr verbindbar bzw. von dieser wieder lös- und abnehmbar. Es wird dadurch nicht nur eine einfache Reinigung möglich, sondern auch eine kostengünstige Montage bei der Herstellung.

Anhand illustrierter Ausführungsbeispiele wird die Erfindung näher erläutert. Es zeigen:
- Figur 1: eine perspektivische Darstellung einer Präzisionswaage,

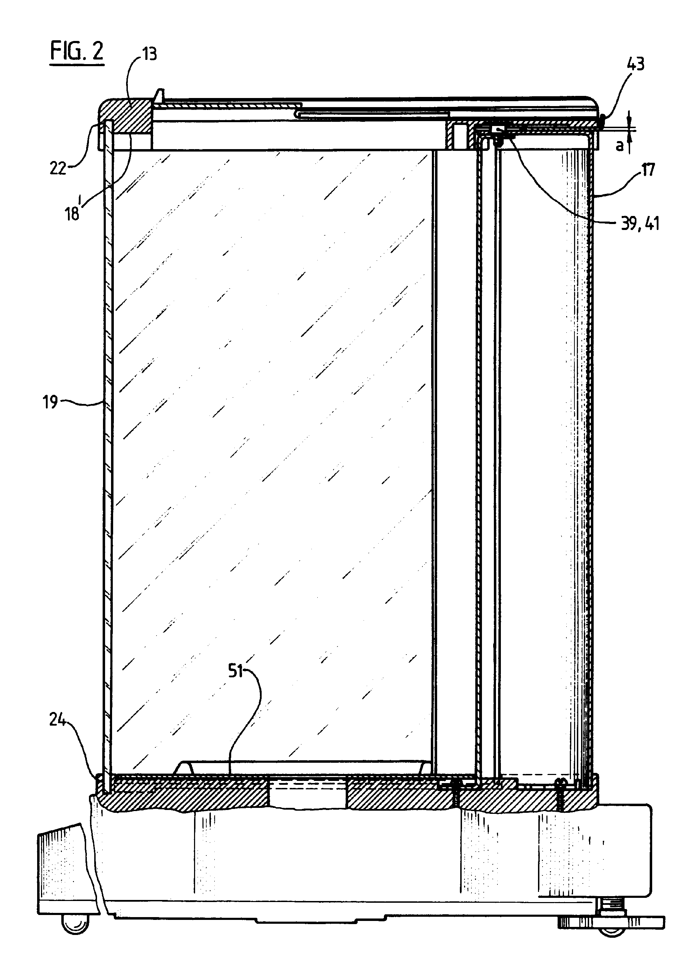

- Figur 2: einen Querschnitt längs Linie II-II in Figur 1,
- Figur 3: eine Untersicht der oberen Abdeckung in Figur 1 in abgehobenem Zustand,
- Figuren 4 und 5: einen Querschnitt durch die Verriegelungsvorrichtung in je einer weiteren Ausführung und
- Figur 6: eine Teiluntersicht der oberen Abdeckung mit einem schwenkbaren Riegel.

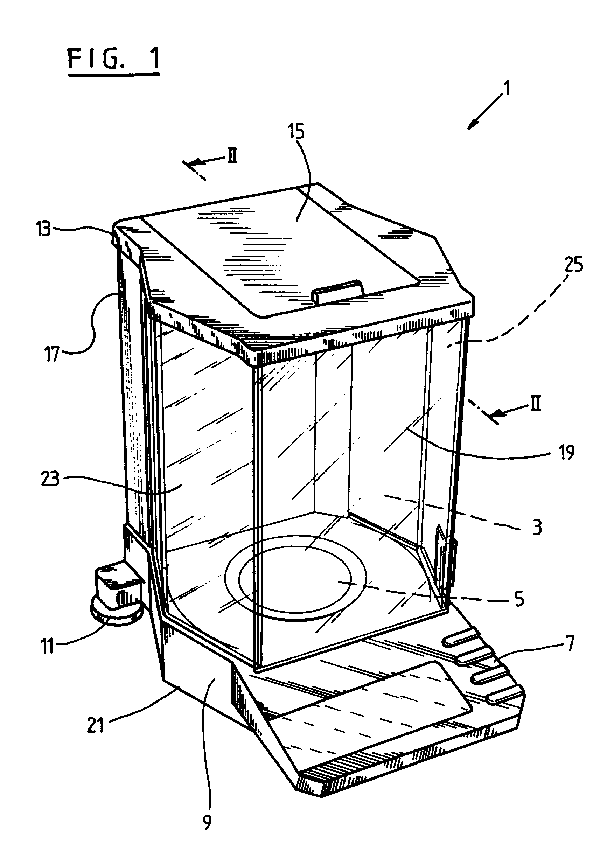

Die in Figur 1 dargestellte Waage 1 weist einen geschlossenen Wägeraum 3 auf. In dessen Zentrum ist die Waagschale 5 angeordnet. Auf der Vorderseite der Waage ist ein geneigt zur Horizontalen liegendes Bedienungs- und Tastaturfeld 7 sichtbar. Unterhalb des Wägeraumes 3 sind im Gehäuse 9 die elektronischen und die mechanischen Wägeelemente untergebracht. Die Waage 1 steht auf drei Füssen 11, von denen nur ein einziger sichtbar ist. Der Wägeraum 3 ist oben durch eine Abdeckung 13 verschlossen. In der Abdeckung 13 kann eine Oeffnung mit einem verschiebbaren Fenster 15 eingelassen sein, welches zur Beschickung der Waage 1 von oben geöffnet werden kann. Die Rückseite des Wägeraumes 3 wird durch eine Rückwand 17 gebildet, die auch die Abdeckung 13 trägt. Auf der Vorderseite wird der Wägeraum 3 durch eine Frontscheibe 19 begrenzt, die unten in einer Nut 24 am Gehäuse 9 und oben in einer Nut 22 an der Abdeckung 13 gehalten ist. Seitlich wird der Wägeraum 3 durch je ein Seitenfenster 23,25 abgeschlossen. Die beiden Seitenfenster 23,25 sind in entlang dem Gehäuseboden 21 und der Abdeckung 13 angebrachten nutförmigen Führungen 35,37 verschiebbar.

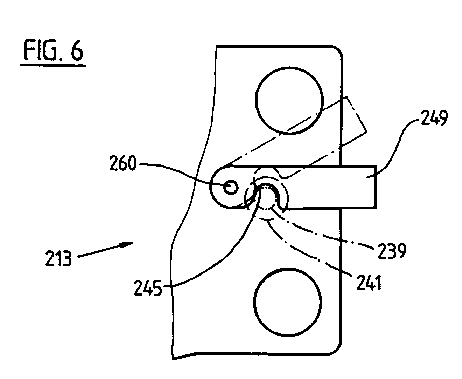

Die obere Abdeckung 13 erstreckt sich über die Rückwand 17 und liegt satt auf deren oberer Fläche 18 auf. In der oberen Fläche 18 ist ein Bolzen 39 mit einem Kopf 41 befestigt. Der Kopf 41 überragt die obere Fläche 18 unter Bildung eines Ringraumes von der Breite a (Fig.4).

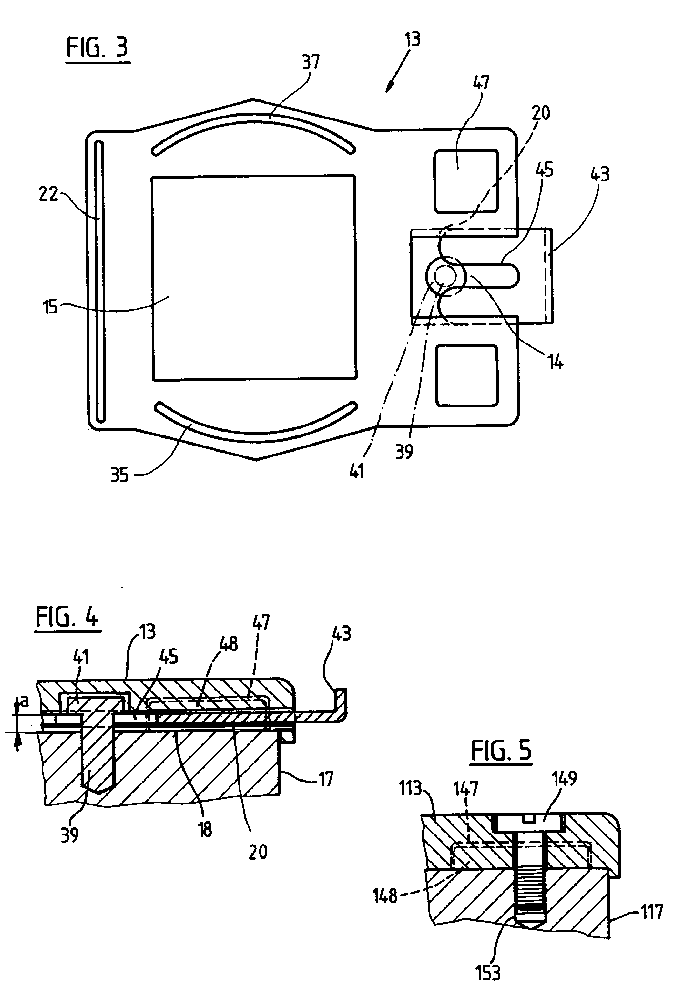

An der Unterseite der oberen Abdeckung 13 ist im Bereich 14 (vergl. Fig.3), der über dem Bolzen 39 zu liegen bestimmt ist, ein Verriegelungsmittel in Gestalt eines verschiebbaren Riegels 43 angebracht. Der Riegel 43 ist seitlich in an der oberen Abdeckung 17 angebrachten Führungsnuten 20 verschiebbar gehalten. Die Vorderkante des u-förmig ausgebildeten Riegels 43 weist einen Schlitz 45 auf, welcher dazu bestimmt ist, bei vorgeschobenem Riegel 43 den Kopf 41 des Bolzens 39 beidseitig zu untergreifen und die obere Abdeckung 13 starr mit der Rückwand 27 zu verbinden.

Damit die obere Abdeckung 13 präzise positioniert auf der Rückwand 17 gehalten werden kann, können in der oberen Abdeckung 13 Ausnehmungen 47 angebracht sein, in welche entsprechend geformte Nocken 48 (Figur 4) auf der Oberfläche der Rückwand 17 spielarm eingreifen.

Der Riegel 43 könnte auch an der oberen Fläche 18 der Rückwand 17 verschiebbar befestigt sein und einen Bolzen 39 mit einem Kopf 41 umgreifen. Der Bolzen 39 müsste dann an der Abdeckung 18 befestigt sein und von dieser nach unten abstehen (keine Abbildung).

Alternativ kann anstelle des Riegels 43 ein anderes Verriegelungsmittel, z.B. eine durch die obere Abdeckung 113 hindurchgreifende, in eine in der Rückwand 117 eingelassene Gewindebohrung 153 einzugreifen bestimmte Schraube 149, welche mit einer Münze zu bedienen ist, vorgesehen sein (Figur 5).

In der Ausgestaltung der Erfindung nach Figur 6 ist ein um eine Achse 260 schwenkbarer Riegel 249 an der Unterseite der Abdeckung 213 befestigt. In der ausgezogenen Stellung untergreift der Riegel 249 den Kopf 241 des Bolzens 239 und hält die Abdeckung 213 mit der Rückwand der Waage verbunden. Durch Schwenken des Riegels 249 gleitet der seitlich angebrachte Schlitz 245 aus dem Eingriff mit dem Bolzen 239, und die Abdeckung 213 kann abgehoben werden.

Zum Reinigen des Innern des Wägeraumes 3 wird das Verriegelungsmittel gelöst, z.B. der Riegel 43 aus dem Gehäuse herausgezogen oder die Schraube 149 teilweise herausgedreht und damit die Verbindung zur Rückwand 17 bzw. 117 gelöst. Durch Abheben der Abdeckung 13, welche auch die oberen Führungen 35,37 der Seitenfenster 23,25 und die obere nutförmige Halterung 22 der Frontwand 19 aufweist, werden die oberen Kanten sowohl der Seitenwände 23,25 als auch der Frontwand 19 freigelegt. Die drei Teile können nun aus den unteren Führungen 35,37, bzw. der Halterung der Frontwand 19, herausgehoben und einzeln gereinigt werden. Nach dem Abheben der Waagschale 5 aus deren Lagerung lässt sich auch der Wägeraumboden, meistens als ein tiefgezogenes Blech 51 ausgebildet, abheben und reinigen.

## Patentansprüche

1. Präzisionswaage (1) mit einer Waagschale (5) und mit einem die Waagschale (5) allseits umschliessenden Wägeraum (3), mit einer mit dem Gehäuse (9) der Waage verbundenen Rückwand (17), mit wenigstens einem verschiebbaren seitlichen Fenster (23,25) und mit einer als Fenster ausgebildeten Frontwand (19), sowie mit einer den Wägeraum (3) oben abschliessenden Abdeckung (13), dadurch gekennzeichnet, dass die Abdeckung (13) durch ein Verriegelungsmittel (43,149,249) mit der Rückwand (17,117,217) fest verbindbar ist und zum Freilegen und Reinigen der Fenster (19,23,25) durch Lösen der Verriegelung von der Rückwand (17,117,217) lös- und abhebbar ist.

2. Waage nach Anspruch 1, dadurch gekennzeichnet, dass an der Unterseite der Abdeckung (13) eine Führung (33,35) für das mindestens eine verschiebbare Fenster (23) und die Frontwand (16) eingelassen ist.

3. Waage nach Anspruch 1, dadurch gekennzeichnet, dass das Verriegelungsmittel als ein an der Unterseite der Abdeckung (13) verschieb- oder verdrehbar angebrachter Riegel (43,243) ausgebildet ist, welcher in und ausser Eingriff mit einem Verriegelungsbolzen (39,239) an der Rückwand (17,217) bringbar ist.

4. Waage nach Anspruch 1, dadurch gekennzeichnet, dass das Verriegelungsmittel als ein an der Rückwand (17) verschieb- oder verdrehbar angebrachter Riegel (43,243) ausgebildet ist, welcher in und ausser Eingriff mit einem Verriegelungsbolzen (39,239) an der Unterseite der Abdeckung (13,213) bringbar ist.

5. Waage nach einem der Ansprüche 1 oder 2, dadurch gekennzeichnet, dass das Verriegelungsmittel als eine in der Abdeckung (113) gehaltene und in die Rückwand (117) eindrehbare Schraube (149) ausgebildet ist.

6. Waage nach einem der Ansprüche 1 bis 5, dadurch gekennzeichnet, dass an der Unterseite der Abdeckung (13) und an der Oberseite der Rückwand (17) Mittel (47,48) zum Positionieren der Abdeckung (13) auf der Rückwand (17) angebracht sind.

7. Waage nach Anspruch 6, dadurch gekennzeichnet, dass die Mittel zum Positionieren aus einem oder mehreren, die Oberfläche (18) der Rückwand (17) überragenden Nocken (48) und an der Unterseite der Abdeckung (13) eingelassenen Ausnehmungen (47) zur spielarmen Aufnahme der Nocken (48) bestehen.

## Claims

1. A precision balance (1) with a weighing pan (5) and with a weighing space (3) which encloses the weighing pan (5) on all sides, with a rear wall (17) connected to the housing (9) of the balance, with at least one displaceable lateral window (23, 25) and with a front wall (19) in the form of a window, and also with a cover (13) which closes off the weighing space (3) at the top, characterised in that the cover (13) can be fixedly connected to the rear wall (17, 117, 217) by a locking means (43, 149, 249) and can be released from the rear wall (17, 117, 217) and lifted off by releasing the locking action, to expose and clean the windows (19, 23, 25).

2. A balance according to claim 1 characterised in that a guide (33, 35) for the at least one displaceable window (23) and the front wall (19) is let in at the underside of the cover (13).

3. A balance according to claim 1 characterised in that the locking means is in the form of a lock member (43, 243) which is disposed slidably or rotatably at the underside of the cover (13) and which can be brought into and out of engagement with a locking pin (39, 239) on the rear wall (17, 217).

4. A balance according to claim 1 characterised in that the locking means is in the form of a lock member (43, 243) which is mounted slidably or rotatably on the rear wall (17) and which can be brought into and out of engagement with a locking pin (39, 239) at the underside of the cover (13, 213).

5. A balance according to one of claims 1 and 2 characterised in that the locking means is in the form of a screw (149) which is held in the cover (113) and which can be screwed into the rear wall (117).

6. A balance according to one of claims 1 to 5 characterised in that means (47, 48) for positioning the cover (13) on the rear wall (17) are provided at the underside of the cover (13) and the top side of the rear wall (17).

7. A balance according to claim 6 characterised in that the positioning means comprise one or more projections (48) which project beyond the surface (18) of the rear wall (17) and recesses (47) which are let in at the underside of the cover (13) for receiving the projections (48) with a small amount of play.

## Revendications

1. Balance de précision (1) constituée d'un plateau (5) et d'une enceinte de pesage (3) qui entoure le plateau (5) de tous côtés, d'une paroi arrière (17) reliée au boîtier (9) de la balance, d'au moins une fenêtre latérale coulissante (23, 25) et d'une paroi avant (19) conçue en forme de fenêtre, ainsi que d'un couvercle (13) qui ferme l'enceinte de pesage (3) dans sa partie supérieure, caractérisée en ce que le couvercle (13) est solidarisé à la paroi arrière (17, 117, 217) à l'aide d'un moyen de verrouillage (43, 149, 249) et peut être désolidarisé et déposé de la paroi arrière (17, 117, 217) en libérant le verrouillage pour dégager et nettoyer les fenêtres (19, 23, 25).

2. Balance selon la revendication 1, caractérisée en ce que sur le dessous du couvercle (13), est ménagé un guide (35, 37) pour la fenêtre coulissante (23), au nombre d'au moins une, et pour la paroi avant (19).

3. Balance selon la revendication 1, caractérisée en ce que le moyen de verrouillage est conçu sous la forme d'un verrou (43, 243) qui est monté coulissant ou pivotant sur le dessous du couvercle (13) et dont la liaison avec une cheville de verrouillage (39, 239) disposée sur la paroi arrière (17, 217) peut être établie et supprimée.

4. Balance selon la revendication 1, caractérisée en ce que le moyen de verrouillage est conçu sous la forme d'un verrou (43, 243) qui est monté coulissant ou pivotant sur la paroi arrière (17) et dont la liaison avec une cheville de verrouillage (39, 239) disposée sur le dessous du couvercle (13, 213) peut être établie et supprimée.

5. Balance selon l'une des revendications 1 ou 2, caractérisée en ce que le moyen de verrouillage est conçu sous la forme d'une vis (149) maintenue dans le couvercle (113) et vissée dans la paroi arrière (117).

6. Balance selon l'une des revendications 1 à 5, caractérisée en ce que des moyens (47, 48) sont disposés sur le dessous du couvercle (13) et sur le dessus de la paroi arrière (17) pour positionner le couvercle (13) sur la paroi arrière (17).

7. Balance selon la revendication 6, caractérisée en ce que les moyens de positionnement sont constitués d'une ou plusieurs saillies (48), qui dépassent de la surface supérieure (18) de la paroi arrière (17), et d'évidements (47) qui sont pratiqués sur le dessous du couvercle (13) et qui servent à loger les saillies (48) avec un faible jeu.
